# EUROPÄISCHE PATENTSCHRIFT

(11) **EP 1 798 089 B1**
(45) Veröffentlichungstag und Bekanntmachung des Hinweises auf die Patenterteilung: **27.01.2010**
(21) Anmeldenummer: 06025946.2
(22) Anmeldetag: 14.12.2006
(51) Int. Cl.: B60J 7/20

(54) **Hutablage eines Cabriolets**
Rear shelf for cabriolet
Plage arrière pour cabriolet

(30) Priorität: 14.12.2005 DE 102005060204
(43) Veröffentlichungstag der Anmeldung: 20.06.2007
(73) Patentinhaber: Webasto AG, 82131 Stockdorf (DE)
(72) Erfinder: Wegener, Fritz, 82205 Gilching (DE); Rieger, Gerhard, 70499 Stuttgart (DE)
(74) Vertreter: Konnerth, Dieter Hans

(56) Entgegenhaltungen:
- EP-B1- 0 860 313
- DE-A1- 10 036 223
- DE-A1- 10 217 916
- DE-A1- 10 237 148
- DE-C1- 10 112 344
- DE-U1- 20 208 001

## Beschreibung

Die Erfindung betrifft eine Hutablage eines Cabriolets mit einem Dach, das mittels einer Dachkinematik an der Karosserie bewegbar gelagert und in einen rückwärtigen Ablageraum absenkbar ist, wobei die Hutablage verschwenkbar gelagert und mittels einer mit der Dachkinematik gekoppelten Verstelleinrichtung zwischen einer herabgeschwenkten Abdeckstellung und einer hochgeschwenkten Zwischenstellung verstellbar ist.

Aus dem Stand der Technik sind Mechanismen zum Koppeln der Bewegung der Hutablage an die Bewegung der Dachkinematik bekannt, die in aufwendiger Gestaltung eine Abhängigkeit des Bewegungsverhaltens der Hutablage von demjenigen der Dachkinematik bereitstellen.

Aus der DE 100 36 223 A1 ist ein Fahrzeug mit einem verstellbaren Dach und einer Hutablage bekannt geworden, die mittels einer ersten Lenkereinrichtung und einer zweiten Lenkereinrichtung um zwei zugeordnete veränderbare Schwenkachsen verstellbar gelagert ist, so dass sie zwischen ihrer horizontalen Abdeckstellung und ihrer hochgeschwenkten Offenstellung zum Freilegen eines Bewegungsweges des zu öffnenden bzw. abzulegenden Daches verschwenkbar sowie horizontal verlagerbar ist. Die erste Lenkereinrichtung bildet eine ständige Bewegungskoppelung der Hutablage mit einem von einer Stelleinrichtung angetriebenen Hauptlenker einer das Dach bewegbar lagernden Dachkinematik. Die zweite Lenkereinrichtung verbindet die Stelleinrichtung mit der Hutablage bewirkt während einer Betätigung der Stelleinrichtung bei ruhender Dachkinematik das Verschwenken der Hutablage in die Abdeckstellung. Die beiden Verstelleinrichtungen für die Schwenkbewegung und die Längsbewegung sind aufgrund der Vielzahl der erforderlichen Lenker vergleichsweise aufwendig gestaltet.

Aus der DE 102 17 916 A1 ist ein Cabriolet mit einem ablegbaren Dach und einer Hutablage bekannt geworden, die um eine karosserieseitig feste Schwenkachse zwischen ihrer Abdeckstellung und ihrer Offenstellung verschwenkbar ist. Das Abwärtsverschwenken der Hutablage in ihre Abdeckstellung erfolgt ausschließlich mittels einer Ankopplung an eine Schließbewegung eines rückwärtigen Verdeckkastendeckels.

Aus der EP 0 860 313 B1 ist eine Hutablage eines Cabriolets bekannt geworden, die an einer Trennwand zwischen den Fahrzeugsitzen und dem Kofferraum schwenkbar gelagert ist und aus ihrer horizontalen Abdeckstellung innerhalb bzw. unterhalb eines hinteren Dachteils des geschlossenen Cabriodaches in eine vertikale Zwischenstellung an die Rückseite der Trennwand schwenkbar ist, um eine Durchtrittsöffnung zum Ablegen des Daches in den Ablageraum im Kofferraum freizugeben. Die Schwenkbewegung der Hutablage wird von der Schwenkbewegung der einen Verdeckkastendeckel bildenden und zum Ablegen des Daches an ihrem Vorderrand hochschwenkbaren Kofferraumklappe gesteuert, wobei ein Bowdenzug eine direkte Verbindung zwischen der Kofferraumklappe und der von einer Feder in Ablagestellung vorgespannten Hutablage bildet.

Der Erfindung liegt die Aufgabe zugrunde, eine eingangs genannte Hutablage zu schaffen, die eine einfach gestaltete Schwenkeinrichtung aufweist und deren Schwenkverhalten relativ zur Dachkinematik verbessert ist.

Die Aufgabe wird bei der oben genannten Hutablage erfindungsgemäß dadurch gelöst, dass die Verstelleinrichtung mittels eines federartig wirkenden Elements an die Dachkinematik angekoppelt ist. Anstatt einer starren Kopplung und damit einer ständigen Bewegung der Hutablage während der Bewegung der Dachkinematik ermöglicht das federartig wirkende Element aufgrund seiner Anpassungsfähigkeit eine derartige Einstellung, dass beispielsweise die Hutablage ruht, während sich die Dachkinematik bewegt, oder dass die Hutablage z. B. von einer Betätigungseinrichtung verschwenkt werden kann, wenn die Dachkinematik ruht. Ein solches federartig wirkendes Element gestattet eine flexible Kopplung der Verstelleinrichtung der Hutablage mit der Dachkinematik mit einer geringen Anzahl von Bauteilen. Als federartig wirkendes Element wird allgemein ein Element oder auch eine Baueinheit verstanden, das bzw. die sich beim Aufbringen von Widerstandskräften in seiner bzw. ihrer die Kopplung bewirkenden Gestalt z. B. durch Änderung einer Bauteillänge oder einer Schwenkstellung zweier Bauteile zueinander reversibel verändert und bei Ausbleiben dieser Kraft oder bei Aufbringen einer Gegenkraft seine ursprüngliche Gestalt oder Anordnung wieder einnimmt.

Vorteilhafte Ausgestaltungen der Erfindung sind in den Unteransprüchen angegeben.

Vorzugsweise ist zumindest ein Anschlag vorgesehen, über den das Federverhalten des federartig wirkenden Elements einstellbar ist. Mittels des Anschlags kann die Bewegung desjenigen Teils des federartigen Elements, das mit der Hutablage gekoppelt ist, gestoppt werden, während die Bewegung des verlagerbaren anderen Teil des federartigen Elements, das mit der Dachkinematik gekoppelt ist, fortgesetzt werden kann. Durch die Einstellung der Position des Anschlags lässt sich das Bewegungsverhalten der Verstelleinrichtung der Hutablage festlegen.

Zweckmäßigerweise ist der Anschlag einer Schwenkendstellung der Hutablage und insbesondere der hochgeschwenkten Hutablage zugeordnet.

Gemäß einer bevorzugten Gestaltung ist vorgesehen, dass beim Ablegen des geschlossenen Daches mittels der bewegten Dachkinematik das federartig wirkende Element zum Hochschwenken der Hutablage zunächst eine Langstellung aufweist, dass der Schwenkweg der hochgeschwenkten Hutablage durch einen Anschlag begrenzt ist und die sich in eine Ablagestellung weiter bewegende Dachkinematik das federartig wirkende Element in eine verkürzte Zwischenstellung bewegt, und dass entweder während der letzten Ablagebewegung des Daches die Dachkinematik die Hutablage in ihre Ablagestellung herabgeschwenkt und dabei das federartig wirkende Element in eine Kurzstellung verstellt oder bei abgelegtem Dach eine Betätigungseinrichtung die Hutablage in ihre Ablagestellung herabschwenkt und dabei das federartig wirkende Element in eine Kurzstellung verstellt.

Damit kann durch den Einsatz des federartig wirkenden Elements bei der Verstelleinrichtung die Hutablage nach Abschluß der Dachablagebewegung durch eine beliebige Betätigungseinrichtung geschlossen bzw. herabgeschwenkt werden, wobei die Betätigungseinrichtung ein eigenständiger Antriebsmotor oder ein weiteres Bauteil sein kann, das im Zusammenhang mit der Verstellung des Daches eine Bewegung ausführt, die über eine Kopplung mit der Hutablage zu deren Verstellung verwendet wird.

Andererseits wird ein zusätzlicher Antrieb oder eine zusätzliche Kopplung eingespart, wenn die Dachkinematik während ihrer letzten Ablagebewegung des Daches die Hutablage in ihre Ablagestellung selbst herabgeschwenkt.

Gemäß einer bevorzugten Gestaltung ist vorgesehen, dass die Dachkinematik und insbesondere ein Hauptlenker mittels eines Eingriffs an dem federartig wirkenden Element und/oder an einem das federartig wirkende Element verstellenden Bauteil die Hutablage verschwenkt.

Zweckmäßigerweise ist die Hutablage mittels eines Trägerteils um eine karosseriefeste Schwenkachse schwenkbar gelagert. Des weiteren kann die Hutablage mittels einer Einrichtung, insbesondere einer Feder, gewichtsentlastet sein. Beispielsweise ist eine Schenkelfeder an der Lagerstelle oder eine Zugfeder vorgesehen, die die Hutablage aus der Ablagestellung nach oben in die hochgeschwenkte Stellung vorspannt.

Die Verstelleinrichtung kann einen Übersetzungshebel aufweisen, der karosserieseitig schwenkbar gelagert ist und einerseits über eine Lenkereinrichtung mit der Hutablage und andererseits mit dem federartig wirkenden Element gekoppelt ist. Der Übersetzungshebel kann im Hinblick auf die Bewegungsanforderungen mit entsprechend gebildeten Armen versehen sein, an denen die Lenkereinrichtung bzw. das federartig wirkende Element angekoppelt ist. Als Übersetzungshebel kann jedes geeignetes Bauteil zum Übertragen der Bewegungen gewählt werden.

Am Übersetzungshebel kann ein Eingriffsteil angebracht oder mit diesem verbunden sein, an dem die Dachkinematik bzw. der Hauptlenker zum Verstellen der Hutablage in die Ablagestellung angreift. Diese Gestaltung kann insbesondere dann gewählt werden, wenn die Dachkinematik bzw. der Hauptlenker auf ihrem letzten Ablageweg den Übersetzungshebel bzw. die Hutablage unmittelbar in ihre Abdeckstellung verschwenkt.

Zweckmäßigerweise enthält das federartig wirkende Element selbst auch eine Verstellbegrenzung, die insbesondere entgegen dem Anschlag wirkt. Das federartig wirkende Element ist z. B. ein Federelement und insbesondere eine Gasdruckfeder, die aufgrund ihrer Bauart eine Verstellbegrenzung beim Ausziehen auf ihre maximale Länge aufweist.

Nachfolgend wird eine erfindungsgemäße Hutablage anhand eines Ausführungsbeispiels unter Bezugnahme auf die Zeichnung näher erläutert. Es zeigt:
- Fig. 1: in einer Draufsicht einen Ausschnitt eines Cabriolets mit einem in Schließstellung angeordneten ablegbaren Dach, einer Hutablage und einer Kofferraumklappe;
- Fig. 2: in einer Draufsicht das Dach beim Öffnungsvorgang;
- Fig. 3: in einer perspektivischen Seitenansicht ein Hauptlager der Dachkinematik sowie eine Verstelleinrichtung der Hutablage, wobei das Dach und die Hutablage geschlossen sind;
- Fig. 4: in einer Ansicht gemäß Fig. 3 das Hauptlager, wobei das Dach teilweise geöffnet ist und die Hutablage in die aufrechte Stellung verschwenkt ist;
- Fig. 5: in einer Ansicht gemäß Fig. 3 das Hauptlager bei vollständig geöffnetem bzw. abgelegtem Dach, wobei die Hutablage noch in der aufrechten Stellung ist;
- Fig. 6: in einer Ansicht gemäß Fig. 3 das Hauptlager bei vollständig geöffnetem bzw. abgelegtem Dach, wobei die Hutablage wieder in ihre Abdeckstellung herabgeschwenkt ist;
- Fig. 7: in einer Seitenansicht ein weiteres Ausführungsbeispiel der Hutablage, wobei die Dachkinematik vor dem Verschwenken der Hutablage dargestellt ist;
- Fig. 8: in einer Seitenansicht gemäß Fig. 7 die Hutablage beim Verschwenken durch die Dachkinematik;
- Fig. 9: in einer Seitenansicht gemäß Fig. 8 die durch die Dachkinematik des geöffneten Daches in ihre Abdeckstellung herabgeschwenkte Hutablage;
- Fig. 10: in einer Draufsicht die Hutablage in einer Stellung gemäß Fig. 7;
- Fig. 11: in einer weiteren Ansicht die Hutablage in einer Stellung gemäß Fig. 10;
- Fig. 12: in einer Draufsicht die Hutablage in einer Stellung gemäß Fig. 9; und
- Fig. 13: in einer weiteren Ansicht die Hutablage in einer Stellung gemäß Fig. 12.

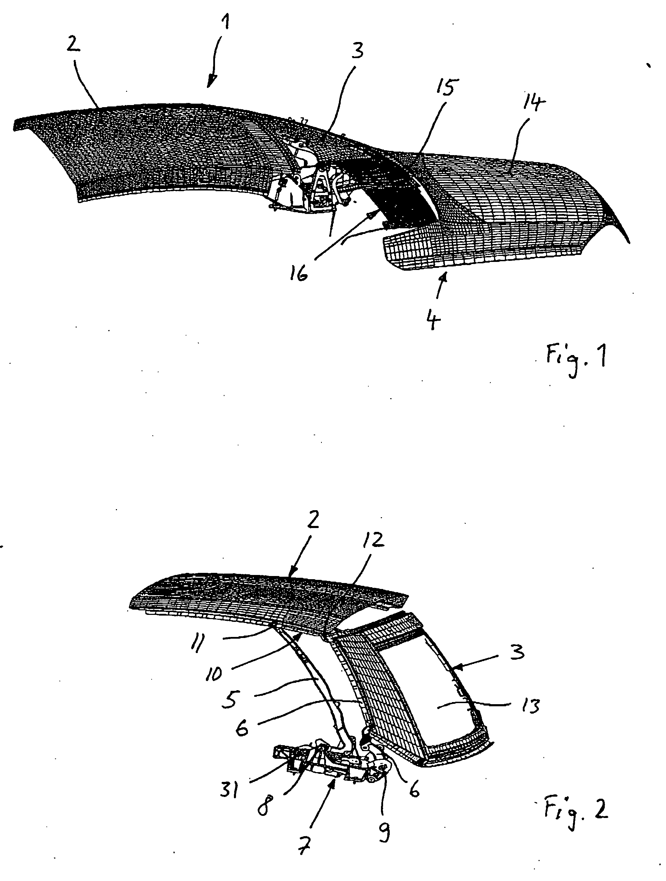

Ein Hardtop-Dach 1 eines Fahrzeugs enthält ein vorderes Dachteil 2 und ein hinteres Dachteil 3, die zwischen einer Schließstellung (Fig. 1) über dem Fahrzeuginnenraum und einer Offen- oder Ablagestellung, in der sie in einem heckseitigen Ablageraum oder Verdeckkasten 4 abgelegt sind, verstellbar sind. Ein solches Dach ist grundsätzlich aus der DE 199 36 252 C2 oder der US 6,866,324 B2 bekannt. Das Dach 1 ist zur Fahrzeuglängsachse mit beidseits gleichen Lager- und Antriebseinrichtungen im wesentlichen symmetrisch aufgebaut, so dass die Beschreibung des Daches 1 im wesentlichen anhand der Lager- und Antriebseinrichtungen an einer Seite erfolgt.

Das Dach 1 ist an der Karosserie mittels einer Lagereinrichtung in Gestalt z. B. eines Viergelenks bewegbar gelagert, das einen Hauptlenker 5 als vorderen Lenker und eine Hauptsäule 6 als hinteren Lenker aufweist, die einerseits an einem karosseriefesten Hauptlager 7 in Schwenkachsen 8 bzw. 9 schwenkbar gelagert und andererseits an einem Trägerteil 10 in Schwenkachsen 11 bzw. 12 schwenkbar angelenkt sind. An dem Trägerteil 10 ist das insbesondere hartschalige vordere Dachteil 2 befestigt.

Das Dach 1 ist gemäß dem dargestellten Ausführungsbeispiel ein bewegbares Hardtop, kann aber alternativ auch ein Faltverdeck oder flexibles Softtop mit einem faltbaren Verdeckgestänge sein. An das in Schließstellung des Daches 1 hintere Dachteil 3 oder C-Segment, das eine Heckscheibe 13 enthält, schließt sich eine Kofferraumklappe 14 an, die mittels einer Schwenklagereinrichtung (nicht dargestellt) um eine vordere Schwenkachse schwenkbar gelagert ist und zum Freigeben einer Beladeöffnung zum Be- und Entladen des Kofferraums an ihrem Hinterrand hochschwenkbar ist.

Die Kofferraumklappe 14, die auch den z. B. einen Teil des Kofferraums einnehmenden Ablageraum oder Verdeckkasten 4 abdeckt, ist mittels einer hinteren Lagereinrichtung um eine hintere Schwenkachse schwenkbar gelagert und wird mit ihrem Vorderrand 15 zum Freigeben einer Durchtrittsöffnung für das Dach 1 um diese Schwenkachse hochgeschwenkt, so dass das Dach 1 in den Verdeckkasten 4 abgelegt bzw. aus ihm ausgefahren werden kann. Beim Ablegen des beispielsweise zweiteiligen Hardtop-Daches 1 schwenkt z. B. das vordere Dachteil 2 gegenbombiert auf das hintere Dachteil 3 und alle Dachteile senken sich in den Verdeckkasten 4 ab.

Eine Abdeckung oder Hutablage 16 (siehe Fig. 1, in Fig. 2 nicht dargestellt) erstreckt sich bei geschlossenem wie auch bei abgelegtem Dach 1 vor der Kofferraumklappe 14 im wesentlichen horizontal über einen Bereich, durch den sich das Dach 1 beim Öffnen und Schließen in den Verdeckkasten 4 bzw. aus ihm heraus bewegt.

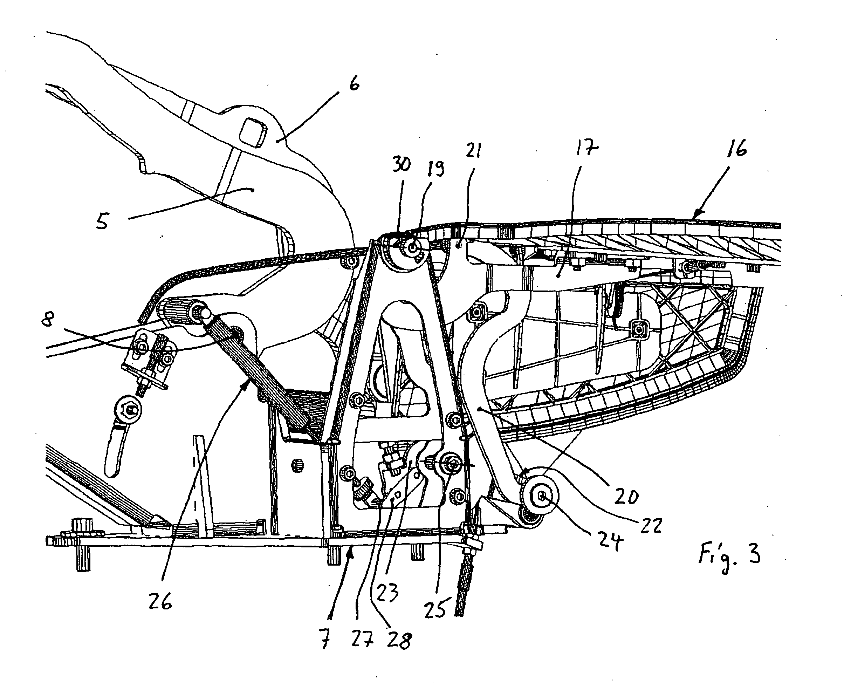

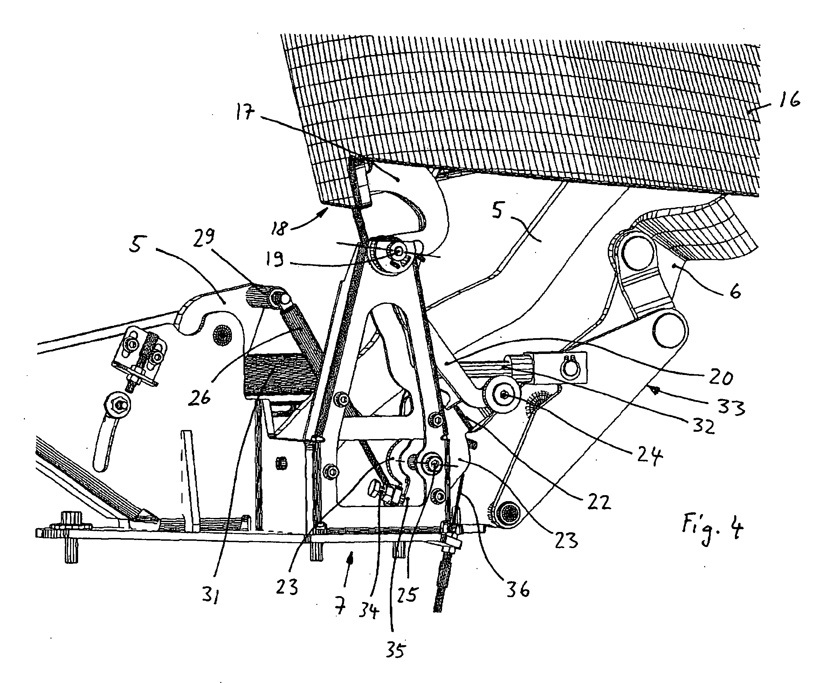

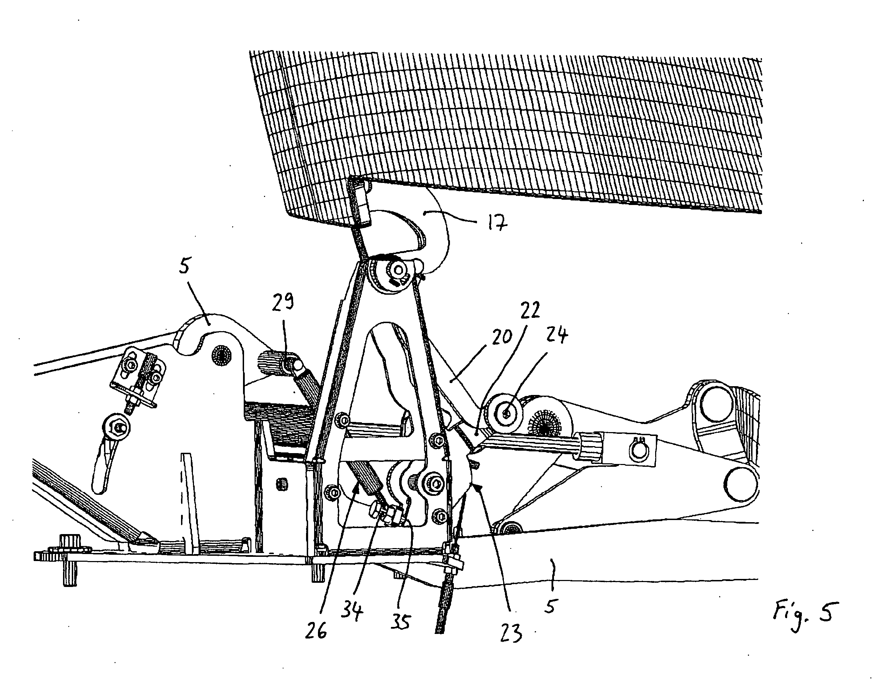

Die Hutablage 16 ist beidseits jeweils an einem Lagerhebel 17 angebracht (siehe Fig. 3 bis 6), der im Bereich des Vorderrandes 18 der Hutablage 16 um eine am Hauptlager 7 ortsfeste Schwenkachse 19 schwenkbar gelagert ist, so dass die Hutablage 16 zwischen ihrer Abdeckstellung (Fig. 1, 3 und 6) und ihrer hochgeschwenkten Offenstellung (Fig. 4 und 5) verschwenkbar ist. Ein ein Bauteil einer Verstelleinrichtung der Hutablage 16 bildender Antriebslenker 20 ist einerseits an dem Lagerhebel 17 in einem von der Schwenkachse 19 beabstandeten Gelenk 21 und andererseits an einem ersten Arm 22 eines Übersetzungshebels 23 in einem Gelenk 24 angelenkt. Der Übersetzungshebel 23 ist am Hauptlager 7 um eine Schwenkachse 25 schwenkbar gelagert. Eine Gasdruckfeder 26 ist einerseits in einem Gelenk 27 an einem zweiten Arm 28 des Übersetzungshebels 23 und andererseits an einem Zapfen 29 angelenkt, der am Hauptlenker 5 zur Schwenkachse 8 des Hauptlenkers 5 parallel verlaufend und davon beabstandet angebracht ist.

Bei geschlossenem Dach 1 ist die Hutablage 16 in ihrer Abdeckstellung unter dem hinteren Dachteil 3 angeordnet (Fig. 1). Eine an der Schwenkachse 19 des Lagerhebels 17 angeordnete Schenkelfeder 30 spannt die Hutablage 16 mit maximaler Vorspannung in Richtung auf ihre hochgeschwenkte Stellung vor. Die Gasdruckfeder 26 ist in ihrer ausgefahrenen Langstellung und hält mittels des Übersetzungshebels 23 und des Antriebslenkers 20 den Lagerhebel 17 und damit die Hutablage 16 in ihrer Abdeckstellung (siehe Fig. 3).

Vor dem Öffnen des Daches 1 wird zunächst die Kofferraumklappe 14 nach hinten aufgeschwenkt, um den Ablageweg für das Dach 1 freizulegen. Dann wird eine am Hauptlager 7 angeordnete Hydraulikzylindereinheit 31 aktiviert, so dass deren ausfahrende Kolbenstange 32 über ein Zwischengetriebe 33 die Hauptsäule 6 in Öffnungsrichtung verschwenkt. Dabei wird über das Hauptviergelenk auch der Hauptlenker 5 verschwenkt (Bewegung von Fig. 3 nach Fig. 4). Der verschwenkende Hauptlenker 5 bzw. der daran angebrachte Zapfen 29 bewegt die Gasdruckfeder 26 derart, dass sich der Übersetzungshebel 23 aufgrund der Vorspannung der Schenkelfeder 30 in Richtung der hochschwenkenden Hutablage 16 verschwenkt. Die Gasdruckfeder 26 behält bei diesem Bewegungsabschnitt ihre maximale Langstellung bei. Beim Öffnen des Daches 1 erreicht der Übersetzungshebel 23 schließlich eine Stellung, in der eine am Übersetzungshebel 23 einstellbar angebrachte Schraube 34 an einem fahrzeugfesten Anschlag 35 anliegt (Fig. 4). Dieser Stellung ist die maximal hochgeschwenkte Stellung der Hutablage 16 zugeordnet, die den Weg zum Ablegen des Daches 1 freigibt.

Beim weiteren Verschwenken der Dachkinematik bzw. des Hauptlenkers 5 durch die Hydraulikzylindereinheit 31 in die vollständig abgelegte Stellung des Daches 1 (Bewegung von der Stellung gemäß Fig. 4 nach Fig. 5) wird die Gasdruckfeder 26 durch die Bewegung des Hauptlenkers 5 gegen den am Anschlag 35 anliegenden Übersetzungshebel 23 teilkomprimiert.

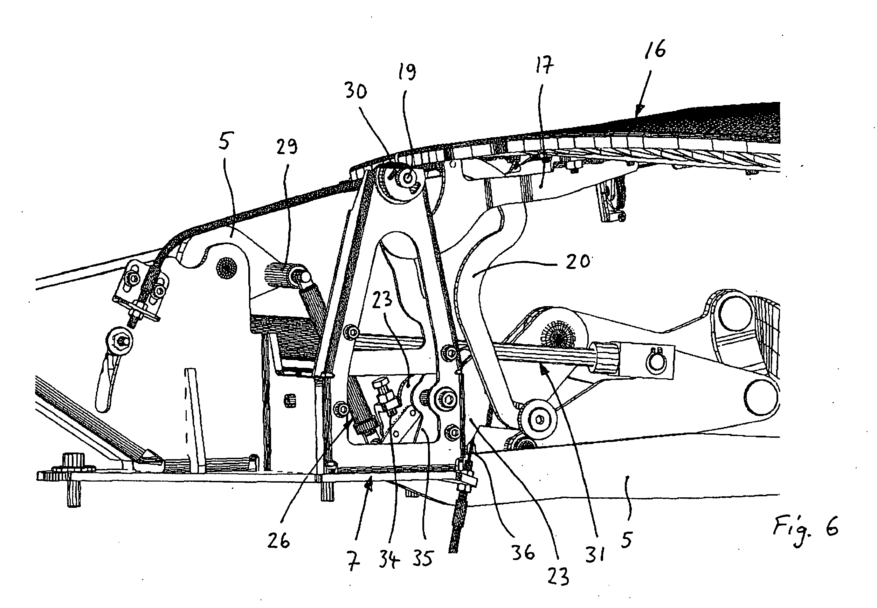

Zum Herabschwenken der Hutablage 16 in ihre Schließ- oder Abdeckstellung wird der Übersetzungshebel 23 durch eine Betätigungseinrichtung in Schließrichtung verschwenkt. Die Betätigungseinrichtung enthält z. B. ein Seil 36, das den Übersetzungshebel 23 mit der Kofferraumklappe 14 derart verbindet, dass die sich zum Abdecken des abgelegten Daches 1 wieder schließende Kofferraumklappe 14 mittels einer Zugbewegung den Übersetzungshebel 23 in die Ausgangsstellung zurückschwenkt, wobei die Gasdruckfeder 26 auf ihre minimale Länge verkürzt wird (Fig. 6).

Zum Schließen des im Verdeckkasten abgelegten Daches 1 wird zunächst die Kofferraumklappe 14 vorderseitig hochgeschwenkt, wobei das Seil 36 entspannt wird und somit das Zurückschwenken des Übersetzungshebels 23 gegen den Anschlag 35 und der Hutablage 16 aufgrund der Kraft der Schenkelfeder 30 gestattet. Dabei längt sich die Gasdruckfeder 26 in ihre teilkomprimierte Stellung gemäß Fig. 5. Nun kann mittels der Hydraulikzylindereinheit 31 über die Dachkinematik bzw. das Hauptviergelenk das Dach 1 aus dem Verdeckkasten 4 ausgeschwenkt werden, wobei sich die Gasdruckfeder 26 gegen die größere Kraft der Schenkelfeder 30 der Hutablage 16 auf ihre maximale Länge längt (Fig. 4).

Die maximal gelängte Gasdruckfeder 26 bildet eine starre Verbindung zwischen dem Hauptlenker 5 und der Hutablage 16 bzw. ihrer Verstelleinrichtung, so dass auf dem letzten Schließweg des Daches 1 (Fig. 4 nach Fig. 3) die Gasdruckfeder 26 die Hutablage 16 gegen die Kraft der Schenkelfeder 30 in ihre Ablagestellung herabschwenkt.

Die Betätigungseinrichtung für den Übersetzungshebel 23 kann statt der Seilkopplung auch einen Antriebsmotor mit einer Steuerung aufweisen.

Mit der voranstehend beschriebenen Vorrichtung kann somit die Bewegung des Hauptlenkers von der Bewegung der Hutablage zeitweise abgekoppelt werden, so dass das gesamte Bewegungsverhalten optimiert werden kann.

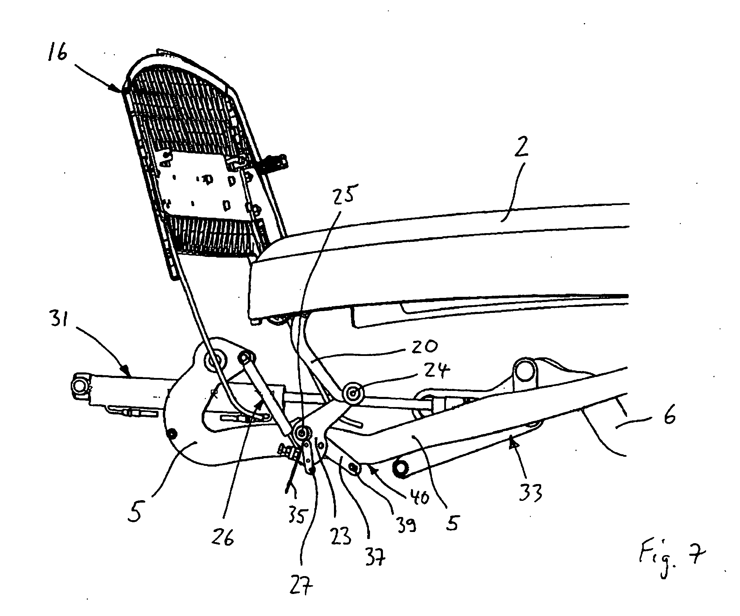

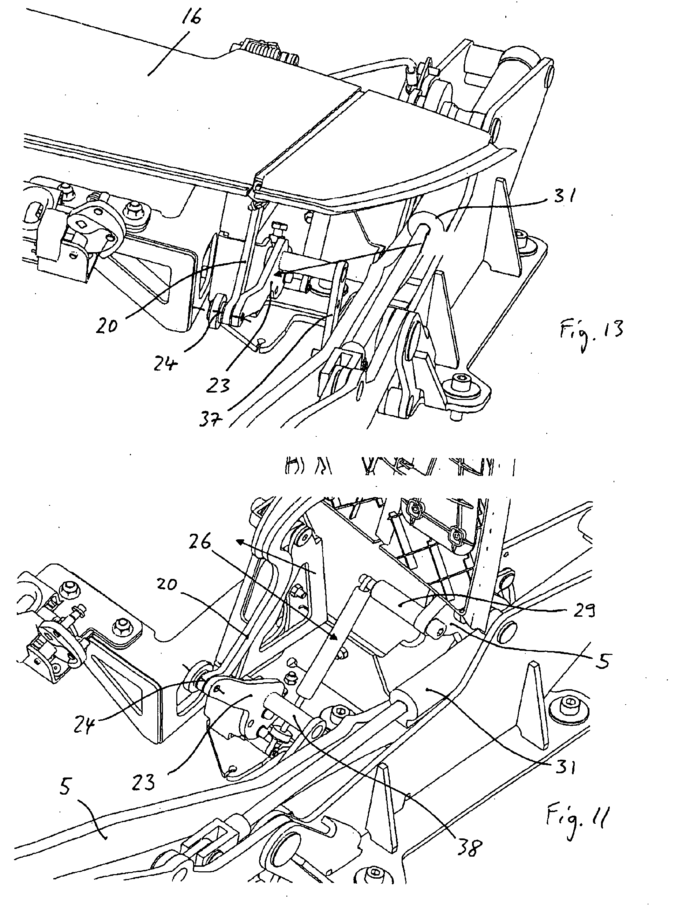

Bei einem abgewandelten Ausführungsbeispiel der voranstehend beschriebenen Hutablage ist (siehe Fig. 7 bis 13) als Betätigungseinrichtung zum letzten Herabschwenken der Hutablage 16 in ihre Schließ- oder Abdeckstellung ein Element der Dachkinematik und insbesondere der Hauptlenker 5 vorgesehen. Dazu ist ein Hebelarm 37 mittels eines Lagerstiftes 38 seitlich neben dem Übersetzungshebel 23 drehfest zu diesem angebracht. An seinem freien Vorderende enthält der Hebelarm 37 ein Eingriffsteil wie z. B. eine Gummirolle 39, an der sich der Hauptlenker 5 z. B. mit seiner äußeren Schmalseite 40 oder mit einem zusätzlich angebrachten Stützteil (nicht dargestellt) anlegen kann.

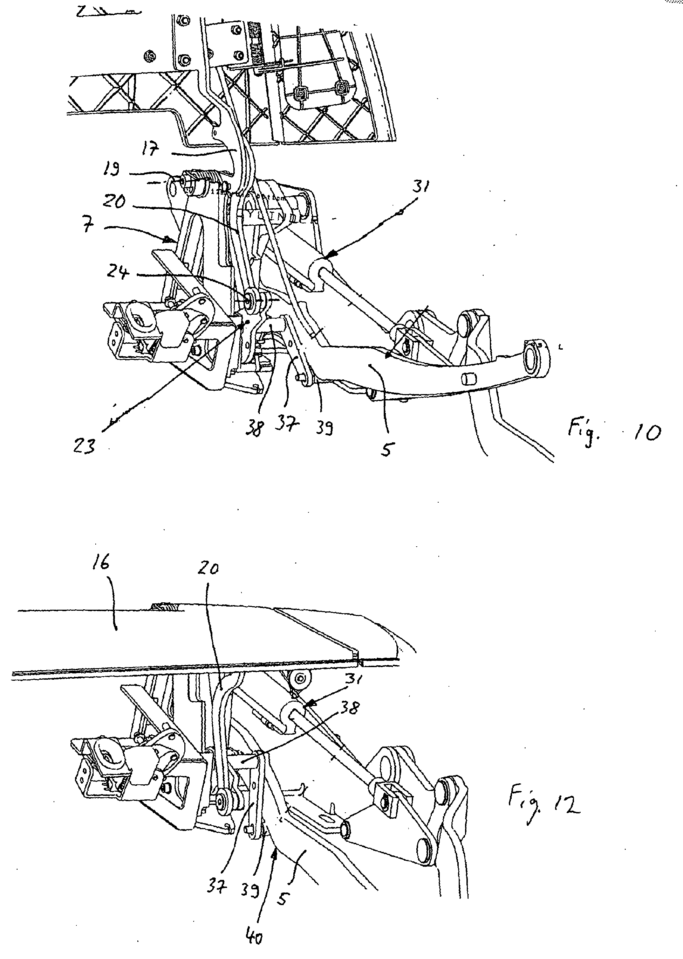

Der Hebelarm 37 ist derart am Übersetzungshebel 23 angeordnet, dass beim Verschwenken des Daches 1 in den Verdeckkasten 4 der Hauptlenker 5 an der Gummirolle 39 in Eingriff kommt (Fig. 7 und 10), wenn sich der Hauptlenker 5 in einer Stellung entsprechend einer Zwischenstellung zwischen den Darstellungen der Fig. 4 und 5 befindet. Dabei ist die Hutablage 16 hochgeschwenkt, die Gasdruckfeder 26 maximal gelängt und die Schraube 34 liegt an dem Anschlag 35 an.

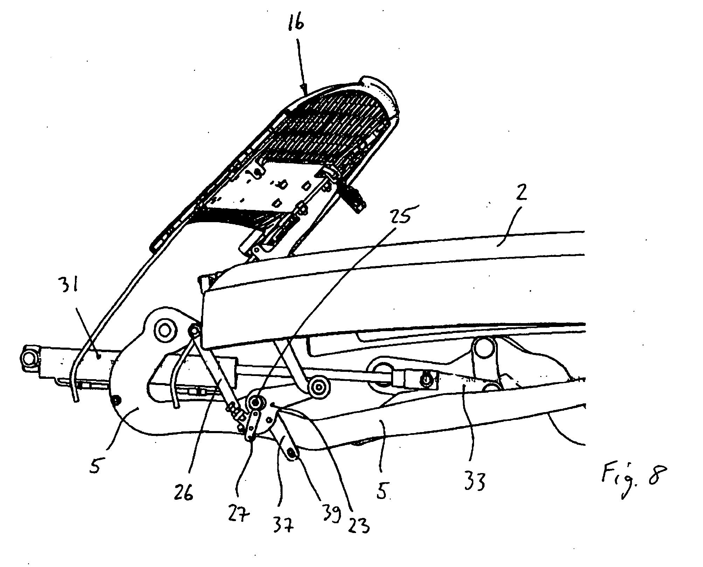

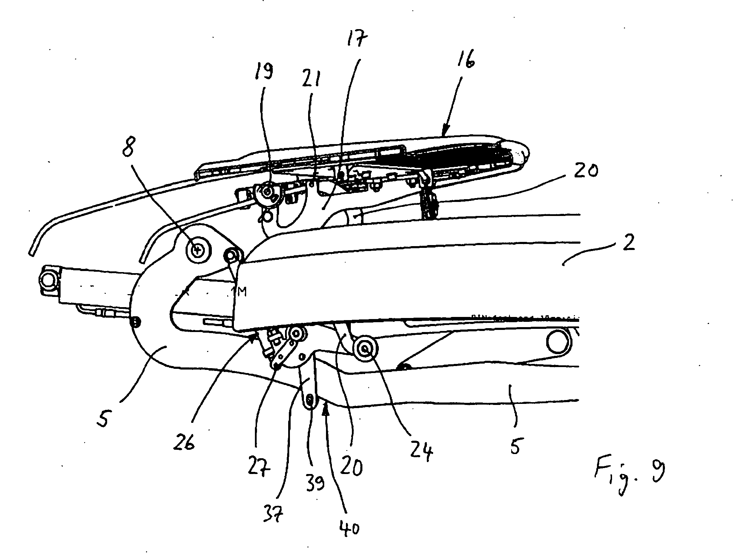

Beim weiteren Verschwenken bzw. Absenken des Hauptlenkers (Fig. 7 nach Fig. 8) mittels der Hydraulikzylindereinheit 31 und des Zwischengetriebes 33 drückt der Hauptlenker 5 über die Gummirolle 39, auf der er abrollt, den Hebelarm 37 abwärts, so dass der Übersetzungshebel 23 entsprechend verschwenkt wird (im Uhrzeigersinn gemäß Fig. 8) und dabei über den Antriebslenker 20 die Hutablage 16 in Richtung ihrer Abdeckstellung bis in ihre endgültige Abdeckstellung herabschwenkt (siehe Fig. 9, 12 und 13). Für einen harmonischen Bewegungsverlauf, insbesondere Beschleunigungs- und Geschwindigkeitsverlauf der Schließbewegung der Hutablage, weist der Hauptlenker 5 eine entsprechend geformte Eingriffsfläche bzw. Schmalseite 40 auf.

### Bezugszeichenliste

- 1: Hardtop-Dach
- 2: vorderes Dachteil
- 3: hinteres Dachteil
- 4: Verdeckkasten
- 5: Hauptlenker
- 6: Hauptsäule
- 7: Hauptlager
- 8: Schwenkachse
- 9: Schwenkachse
- 10: Trägerteil
- 11: Schwenkachse
- 12: Schwenkachse
- 13: Heckscheibe
- 14: Kofferraumklappe
- 15: Vorderrand
- 16: Hutablage
- 17: Lagerhebel
- 18: Vorderrand
- 19: Schwenkachse
- 20: Antriebslenker
- 21: Gelenk
- 22: erster Arm
- 23: Übersetzungshebel
- 24: Gelenk
- 25: Schwenkachse
- 26: Gasdruckfeder
- 27: Gelenk
- 28: zweiter Arm
- 29: Zapfen
- 30: Schenkelfeder
- 31: Hydraulikzylindereinheit
- 32: Kolbenstange
- 33: Zwischengetriebe
- 34: Schraube
- 35: Anschlag
- 36: Seil
- 37: Hebelarm
- 38: Lagerstift
- 39: Eingriffsteil bzw. Gummirolle
- 40: Schmalseite

## Patentansprüche

1. Hutablage (16) eines Cabriolets mit einem Dach, das mittels einer Dachkinematik (5) an der Karosserie bewegbar gelagert und in einen rückwärtigen Ablageraum absenkbar ist,
wobei die Hutablage (16) verschwenkbar gelagert und mittels einer mit der Dachkinematik (5) gekoppelten Verstelleinrichtung (20,23) zwischen einer herabgeschwenkten Abdeckstellung und einer hochgeschwenkten Zwischenstellung verstellbar ist,
**dadurch gekennzeichnet,**
**dass** die Verstelleinrichtung (20, 23) mittels eines federartig wirkenden Elements (26) an die Dachkinematik (5) angekoppelt ist.

2. Hutablage nach Anspruch 1,
**dadurch gekennzeichnet, dass** zumindest ein Anschlag (29) vorgesehen, über den das Federverhalten des federartig wirkenden Elements (26) einstellbar ist.

3. Hutablage nach Anspruch 2,
**dadurch gekennzeichnet, dass** der Anschlag (29) eine Schwenkendstellung der Hutablage (16) und insbesondere der hochgeschwenkten Hutablage (16) bestimmt.

4. Hutablage nach einem der Ansprüche 1 bis 3,
**dadurch gekennzeichnet, dass** beim Ablegen des geschlossenen Daches (1) mittels der bewegten Dachkinematik (5) das federartig wirkende Element (26) zum Hochschwenken der Hutablage (16) zunächst eine Langstellung aufweist,
dass der Schwenkweg der hochgeschwenkten Hutablage (16) durch einen Anschlag (29) begrenzt ist und die sich in eine Ablagestellung weiter bewegende Dachkinematik (5) das federartig wirkende Element (26) in eine verkürzte Zwischenstellung bewegt, und dass
- entweder während der letzten Ablagebewegung des Daches (1) die Dachkinematik (5) die Hutablage (16) in ihre Ablagestellung herabgeschwenkt und dabei das federartig wirkende Element (26) in eine Kurzstellung verstellt
- oder bei abgelegtem Dach eine Betätigungseinrichtung die Hutablage in ihre Ablagestellung herabschwenkt und dabei das federartig wirkende Element in eine Kurzstellung verstellt.

5. Hutablage nach einem der Ansprüche 1 bis 4,
**dadurch gekennzeichnet, dass** die Dachkinematik und insbesondere ein Hauptlenker (5) mittels eines Eingriffs an dem federartig wirkenden Element (26) und/oder an einem das federartig wirkende Element (26) verstellenden Bauteil (37, 39) die Hutablage (16) verschwenkt.

6. Hutablage nach einem der Ansprüche 1 bis 5,
**dadurch gekennzeichnet, dass** die Hutablage mittels eines Trägerteils um eine karosseriefeste Schwenkachse (19) schwenkbar gelagert ist.

7. Hutablage nach einem der Ansprüche 1 bis 6,
**dadurch gekennzeichnet, dass** die Hutablage mittels einer Einrichtung, insbesondere einer Feder (30), gewichtsentlastet ist.

8. Hutablage nach einem der Ansprüche 1 bis 7,
**dadurch gekennzeichnet, dass** ein Übersetzungshebel (23) der Verstelleinrichtung karosserieseitig schwenkbar gelagert ist und einerseits über eine Lenkereinrichtung (20) mit der Hutablage (16) und andererseits mit dem federartig wirkenden Element (26) gekoppelt ist.

9. Hutablage nach Anspruch 8,
**dadurch gekennzeichnet, dass** am Übersetzungshebel (23) ein Eingriffsteil (37, 39) angebracht ist, an dem die Dachkinematik bzw. der Hauptlenker (5) zum Verstellen der Hutablage (16) in die Ablagestellung angreift.

10. Hutablage nach einem der Ansprüche 1 bis 9,
**dadurch gekennzeichnet, dass** das federartig wirkende Element (26) eine Verstellbegrenzung aufweist.

11. Hutablage nach einem der Ansprüche 1 bis 10,
**dadurch gekennzeichnet, dass** das federartig wirkende Element ein Federelement und insbesondere eine Gasdruckfeder (26) ist.

## Claims

1. Rear shelf (16) for a cabriolet having a roof which is mounted movably on the vehicle body by means of roof kinematics (5) and is lowerable into a rear storage space, wherein the rear shelf (16) is mounted pivotably and is adjustable between a downwardly pivoted covering position and an upwardly pivoted intermediate position by means of an adjusting device (20, 23) coupled to the roof kinematics (5), **characterized in that** the adjusting device (20, 23) is coupled to the roof kinematics (5) by means of an element (26) acting in the manner of a spring.

2. Rear shelf according to Claim 1, **characterized in that** at least one stop (29) is provided via which the spring behaviour of the element (26) acting in the manner of a spring is settable.

3. Rear shelf according to Claim 2, **characterized in that** the stop (29) determines a pivoting end position of the rear shelf (16) and in particular of the upwardly pivoted rear shelf (16).

4. Rear shelf according to one of Claims 1 to 3, **characterized in that**, when the closed roof (1) is put away by means of the moving roof kinematics (5), the element (26) which acts in the manner of a spring and is intended for upwardly pivoting the rear shelf (16) initially has a long position, **in that** the pivoting path of the upwardly pivoted rear shelf (16) is limited by a stop (29) and the roof kinematics (5) continuing to move into a storage position moves the element (26) acting in the manner of a spring into a shortened intermediate position, and **in that**
- either, during the final putting-away movement of the roof (1), the roof kinematics (5) downwardly pivots the rear shelf (16) into the storage position thereof and, in the process, adjusts the element (26) acting in the manner of a spring into a short position,
- or, when the roof has been put away, an actuating device downwardly pivots the rear shelf into the storage position thereof and, in the process, adjusts the element acting in the manner of a spring into a short position.

5. Rear shelf according to one of Claims 1 to 4, **characterized in that** the roof kinematics and in particular a main link (5) pivots the rear shelf (16) by means of engagement on the element (26) acting in the manner of a spring and/or on a component (37, 39) which adjusts the element (26) acting in the manner of a spring.

6. Rear shelf according to one of Claims 1 to 5, **characterized in that** the rear shelf is mounted pivotably by means of a support part about a pivot spindle (19) mounted on the vehicle body.

7. Rear shelf according to one of Claims 1 to 6, **characterized in that** the rear shelf is relieved of weight by means of a device, in particular a spring (30).

8. Rear shelf according to one of Claims 1 to 7, **characterized in that** a transmission lever (23) of the adjusting device is mounted pivotably on the vehicle body and is coupled at one end to the rear shelf (16) via a link device (20) and at the other end to the element (26) acting in the manner of a spring.

9. Rear shelf according to Claim 8, **characterized in that** an engagement part (37, 39) on which the roof kinematics or the main link (5) acts in order to adjust the rear shelf (16) into the storage position is attached to the transmission lever (23).

10. Rear shelf according to one of Claims 1 to 9, **characterized in that** the element (26) acting in the manner of a spring has an adjustment limit.

11. Rear shelf according to one of Claims 1 to 10, **characterized in that** the element acting in the manner of a spring is a spring element and in particular is a gas-filled compression spring (26).

## Revendications

1. Plage arrière (16) de cabriolet avec un toit pouvant être placé de façon mobile au niveau de la carrosserie à l'aide d'un système de déplacement de toit (5) et pouvant être abaissé dans un compartiment de rangement arrière ;
la plage arrière (16) pouvant être disposée de façon pivotante et pouvant être déplacée à l'aide d'un dispositif de déplacement (20, 23) couplé au système de déplacement de toit (5) entre une position recouverte pivotée vers le bas et une position intermédiaire pivotée vers le haut ;
**caractérisée en ce que :**
le dispositif de déplacement (20, 23) peut être raccordé à l'aide d'un élément (26) agissant comme un ressort au niveau du système de déplacement de toit (5).

2. Plage arrière selon la revendication 1, **caractérisée en ce qu'**au moins une butée (29) est prévue via laquelle le comportement de ressort de l'élément (26) agissant comme un ressort peut être réglé.

3. Plage arrière selon la revendication 2, **caractérisée en ce que** la butée (29) définit une position de fin de pivotement de la plage arrière (16) et notamment de la plage arrière (16) pivotée vers le haut.

4. Plage arrière selon l'une quelconque des revendications 1 à 3, **caractérisée en ce que** lors du rangement du toit fermé (1) à l'aide du système de déplacement de toit (5) déplacé, l'élément (26) agissant comme un ressort présente d'abord une position longue pour le pivotement vers le haut de la plage arrière (16) ;
la trajectoire de pivotement de la plage arrière (16) pivotée vers le haut est limitée par une butée (29) et le système de déplacement de toit (5) se déplace plus loin encore dans une position rangée déplaçant l'élément (26) agissant comme un ressort dans une position intermédiaire raccourcie ; et
soit, pendant le dernier mouvement de rangement du toit (1), le système de déplacement de toit (5) fait pivoter vers le bas la plage arrière (16) dans sa position rangée et déplace ainsi l'élément (26) agissant comme un ressort dans une position courte ;
- soit, lorsque le toit est rangé, un dispositif d'actionnement fait pivoter vers le bas la plage arrière dans sa position rangée et déplace ainsi l'élément agissant comme un ressort dans une position courte.

5. Plage arrière selon l'une quelconque des revendications 1 à 4, **caractérisée en ce que** le système de déplacement de toit et notamment un guide principal (5) fait pivoter la plage arrière (16) à l'aide d'une intervention au niveau de l'élément (26) agissant comme un ressort et/ou au niveau du composant (37, 39) réglant l'élément (26) agissant comme un ressort.

6. Plage arrière selon l'une quelconque des revendications 1 à 5, **caractérisée en ce que** la plage arrière est disposée de façon à pouvoir pivoter autour d'un axe de pivotement (19) fixe par rapport à la carrosserie à l'aide d'une partie de support.

7. Plage arrière selon l'une quelconque des revendications 1 à 6, **caractérisée en ce que** la plage arrière est allégée à l'aide d'un dispositif, notamment d'un ressort (30).

8. Plage arrière selon l'une quelconque des revendications 1 à 7, **caractérisée en ce qu'**un levier démultiplicateur (23) du dispositif de déplacement est disposé de façon pivotante côté carrosserie et est couplé d'un côté à la plage arrière (16) via un dispositif de guidage (20) et de l'autre côté à l'élément (26) agissant comme un ressort.

9. Plage arrière selon la revendication 8, **caractérisée en ce qu'**une partie de mise en prise (37, 39) est disposée au niveau du levier démultiplicateur (23), au niveau de laquelle le système de déplacement de toit et/ou le guide principal (5) s'engrènent pour amener la plage arrière (16) en position rangée.

10. Plage arrière selon l'une quelconque des revendications 1 à 9, **caractérisée en ce que** l'élément (26) agissant comme un ressort comporte un système de limitation de déplacement.

11. Plage arrière selon l'une quelconque des revendications 1 à 10, **caractérisée en ce que** l'élément agissant comme un ressort est un élément à ressort et notamment un ressort de compression de gaz (26).
